# EUROPÄISCHE PATENTSCHRIFT

(11) **EP 0 388 720 B1**
(45) Veröffentlichungstag und Bekanntmachung des Hinweises auf die Patenterteilung: **31.05.1995**
(21) Anmeldenummer: 90104462.8
(22) Anmeldetag: 08.03.1990
(51) Int. Cl.: B29C 37/02, B29C 31/00

(54) **Anlagen zur Endbehandlung von Flaschenkästen aus Kunststoff**
Device for finishing plastic crates for bottles
Dispositif pour la finition de casiers à bouteilles en matière plastique

(30) Priorität: 22.03.1989 DE 3909527
(43) Veröffentlichungstag der Anmeldung: 26.09.1990
(73) Patentinhaber: Schoeller-Plast AG, 1680 Romont (CH)
(72) Erfinder: Umiker, Hans, Dipl.-Ing., CH-8132 Egg/ZH (CH)
(74) Vertreter: Herrmann-Trentepohl, Werner, Dipl.-Ing.

(56) Entgegenhaltungen:
- EP-A- 0 253 363
- EP-A- 0 258 549
- EP-A- 0 320 624
- US-A- 4 069 091

## Beschreibung

Die Erfindung betrifft eine Anlage gemäß dem Oberbegriff des Patentanspruches 1. Derartige Anlagen sind gauz allgemein bekannt.

Flaschenkästen aus Kunststoff werden vornehmlich durch Spritzgießen in einem Arbeitsvorgang hergestellt. Trotz sorgfältiger Bearbeitung des Formwerkzeugs ist es unvermeidlich, daß insbesondere im Bereich der Trennfugen bzw. der Teilungsebene des Werkzeugs Grate verbleiben, die in einem gesonderten Arbeitsvorgang durch geeignete Entgratungswerkzeuge beseitigt werden müssen. Bislang werden die aus den Formwerkzeugen herausgenommenen Flaschenkästen einer gesonderten Station zugeführt, wo sie ggf. nach Zwischenspeicherung überwiegend manuell an der Entgratungsstation gefaßt und an allen vier Kastenseiten mit geeigneten Engratungswerkzeugen bearbeitet werden. Die dergestalt entgrateten Flaschenkästen gelangen dann in einen weiteren Speicher, von wo sie dann weiteren Bearbeitungsvorgängen zugeführt werden. Insbesondere werden die Flaschenkästen einem Bedruckungsvorgang unterzogen, in dem auf die Kastenseitenwände nach Bedarf ein Einfarben- oder Mehrfarbendruck aufgebracht wird. Dieses Bedrucken der Flaschenkästen erfolgt jeweils auf gesonderten Bedruckungsstraßen, wo in aufeinanderfolgenden Stationen die Bedruckung erfolgt. Für das Bedrucken ist es zwingend, daß die zugeführten Flaschenkästen hinsichtlich der Type erkannt und nach dem erfolgten Erkennen entsprechend ausgerichtet und positioniert den einzelnen Bedruckungsstationen zugeführt werden. Hierzu ist ein entsprechender Mechanismus erforderlich, der durch Einsatz von Videokameras, Detektoren, elektronische Steuerungselemente und dgl., naturgemäß mit einem Aufwand verbunden ist.

Aufgabe der Erfindung ist es, die Endbehandlung der Flaschenkästen noch weiter zu verbessern, und auch den Entgratungsvorgang zu rationalisieren.

Diese Aufgabe wird erfindungsgemäß durch die im kennzeichnenden Teil des Anspruches 1 enthaltenen Merkmale gelöst, wobei zweckmäßige Weiterbildungen der Erfindung durch die in den Unteransprüchen enthaltenen Merkmale gekennzeichnet sind.

Nach Maßgabe der Erfindung wird die Entgratungsbehandlung in die Bedruckungsstraße eingegliedert.Dies hat den Vorteil, daß die für das Erkennen, Ausrichten und Positionieren der den Bedruckungsstationen zugeführten Flaschenkästen erforderlichen Steuerungen auch für die Automatisierung der Entgratungsbehandlung verwendet werden können. Durch die Eingliederung der Entgratungsbehandlung in die Bedruckungsstraße entfallen somit eine Reihe von Arbeitsvorgängen, die bei einem Einsatz der Entgratungsstationen unabhängig von den Bedruckungsstationen doppelt erfolgen. Dadurch ergibt sich eine wesentliche Einsparung an Arbeitsaufwand, aber auch an Steuerungselementen. Nach einer besonders zweckmäßigen Ausführungsform erfolgt die Entgratung sämtlicher vier Kastenseitenwände gleichzeitig in einem Arbeitsvorgang, wozu vier Zustellschlitten, die die entsprechenden Arbeitswerkzeuge zum Entgraten tragen, synchron miteinander längs der Kastenseitenwände bewegt werden. Auch die Zustellbewegung der Arbeitswerkzeuge in ihre Ausgangsstellung erfolgt synchron, wobei die Steuerung der einzelnen Bewegungen über Detektoren bzw. Endanschläge, insbesondere elektronisch erfolgt. Zweckmäßigerweise erfolgt die Zustellung der vier Schlitten auf jeweils ein Kasteneck zu, so daß mit einer Vorschubbewegung längs der entsprechenden Kastenseitenwand die gesamte Länge einer Seitenwand überfahren werden kann. Durch einen solchen Aufbau, kann man aufwendige mehrachsige Roboter einsparen. Da die Einstellung dieser Entgratungsstation in sehr einfacher Weise und sehr schnell erfolgen kann, eignet sich diese Entgratungsstation insbesondere dort, wo verschiedene Typen von Flaschenkästen hergestellt und entsprechend endbehandelt werden müssen.

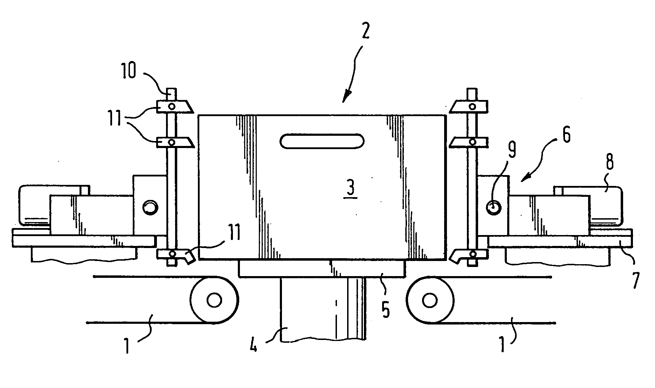

Nachfolgend wird ein bevorzugtes Ausführungsbeispiel anhand der einzigen Figur beschrieben, die in rein schematischer Darstellung Teile der Anlage an der Entgratungsstation, von der Seite gesehen, darstellt.

Die Entgratung bei der erfindungsgemäßen Anlage erfolgt in einer turmartigen Entgratungsstation, die in die Bedruckungsstraße integriert ist, in welcher die Kastenseitenwände je nach Bedarf mit einem Einfarben- oder Mehrfarbendruck versehen werden. Der aus dem Formwerkzeug herausgenommene Flaschenkasten wird hierbei über geeignete Förderer, etwa Förderbänder 1, der allgemein mit 2 bezeichneten Entgratungsstation zugeführt. Nach dem Erkennen der Flaschenkastentype durch geeignete Detektoren an der Entgratungsstation und Ausrichtung des Flaschenkastens erfolgt die Positionierung des zu entgratenden Flaschenkastens 3 durch einen in der Ebene der Förderbänder 1 angeordneten vertikalen Hubtisch 4, dessen Tischplatte 5 den Flaschenkasten von den Bändern 1 abhebt und in Entgratungsstellung hält. In dieser Stellung wird der Flaschenkasten durch geeignete Spann- oder Greifpratzen konventioneller Bauart festgehalten, die der Übersichtlichkeit halber in der Zeichnung nicht dargestellt sind. Bevorzugt werden hierzu Greifklauen verwendet, die am Tisch 5 angeordnet sind und durch den üblicherweise gitterartig untergliederten Kastenboden greifen und den Flaschenkasten in der Arbeitsstellung innerhalb der Entgratungsstation fixiert halten. Die Bearbeitung des entsprechend ausgerichteten und gehaltenen Flaschenkastens in der Entgratungsstation 2 erfolgt über 4 Zustellschlitten 6, von denen in der Figur nur zwei dargestellt sind. Jeder Kastenseitenwand ist jedoch ein Zustellschlitten zugeordnet, der über eine Führung 7 auf die Kastenseitenwand, insbesondere die Kastenecke, über einen Antrieb 8 zugestellt wird. Die Zustellbewegung wird durch einen geeigneten Detektor, insbesondere Endanschlag gestoppt. Danach erfolgt die eigentliche Vorschubbewegung orthogonal zur Führung 7, also in einer Richtung parallel und damit längs der zu bearbeitenden Kastenseitenwand. Im dargestellten Ausführungsbeispiel erfolgt die Arbeitsbewegung senkrecht zur Zeichenebene, wobei der Vorschubantrieb durch eine Spindel 9 lediglich beispielshalber verdeutlicht ist. An einer vertikal ausgerichteten Verstellschiene 10 sind die Bearbeitungsmesser 11 angeordnet, die zur Entgratung der Kanten dienen und in der Figur lediglich rein schematisch dargestellt sind. Selbstverständlich werden je nach zu erwartendem Grat, bedingt durch das Formwerkzeug, entsprechend gestaltete Entgratungswerkzeuge verwendet. Die Messer bzw. Werkzeuge 11 können längs der Schiene 10 geeignet verstellt und fixiert werden. Die Entgratung findet an den oberen und unteren Kanten sowie an den Rändern der Grifföffnung statt. Das Messer für die Grifföffnung kann an einer Querschiene aufgenommen sein und/oder wird durch Nockensteuerung oder Endanschläge in oder an die Grifföffnung gefahren. Wesentlich ist, daß die Zustellbewegung und Vorschub- bzw. Arbeitsbewegung der Schlitten synchron erfolgt, was dadurch erreicht ist, daß die 4 Schlitten miteinander gekoppelt sind. Dadurch erfolgt das Entgraten in einem Takt an allen 4 Kastenseitenwänden gleichzeitig. Gegebenenfalls wird hinter der Entgratungsstation ein Zwischenspeicher vorgesehen sein, falls die Bedruckung der Kastenseitenwände nicht taktgerecht, etwa bei einem Mehrfarbendruck, erfolgen kann. Vom Zwischenspeicher aus werden dann die Flaschenkästen taktgerecht den Bedruckungsstationen zugeführt. Schließlich ist an der Entgratungsstation eine Absaugeinrichtung für das Abführen der bei der Entgratungsbehandlung entstehenden Späne vorgesehen.

## Patentansprüche

1. Anlage zur Endbehandlung von Flaschenkästen aus Kunststoff, welche nach Herausnahme aus dem Formwerkzeug einer Entgratungsbehandlung unterzogen und an den Seitenwänden in einer von Bedruckungsstationen gebildeten Bedruckungsstraße bedruckt werden, unter Verwendung automatischer Typerkennungs-, Ausrichtungs- und Positionierungseinrichtungen **dadurch gekennzeichnet,**
daß die Entgratungsstation (2) in der Bedruckungsstraße eingegliedert aber vor den die Bedruckungsstraße bildenden Bedruckungsstationen, gegebenenfalls unter Einfügung eines Zwischenspeichers, angeordnet ist, und daß die Entgratungsstation, bzw. die Entgratungsbehandlung, automatisiert ist, wobei die für die Bedruckung verwendeten Typerkennungs-, Ausrichtungs- und Positionierungs- Einrichtungen auch für die Automatisierung der Entgratungsbehandlung benutzt werden Können.

2. Anlage nach Anspruch 1, **dadurch gekennzeichnet,**
daß an der Entgratungsstation (2) der Flaschenkasten (3) nach dem Erkennen positioniert wird und danach die Entgratung von allen vier Kastenseiten her synchron erfolgt.

3. Anlage nach Anspruch 1 oder 2, **dadurch gekennzeichnet,**
daß die Entgratungsstation (2) zur Positionierung einen vertikal verfahrbaren Hubtisch (4) zur Aufnahme und Halterung des Flaschenkastens (3) aufweist.

4. Anlagen nach Anspruch 3, **dadurch gekennzeichnet,**
daß der Hubtisch (4) und zwar vorzugsweise die Tischplatte (5) Spann- oder Greifpratzen zur Halterung des Flaschenkastens (3) aufweist.

5. Anlage nach Anspruch 3 oder 4, **dadurch gekennzeichnet,**
daß die Entgratungsstation vier Zustellschlitten (6) für die Entgratungseinrichtungen aufweist, die um den Hubtisch zur Bearbeitung der vier Kastenseiten gruppiert sind.

6. Anlage nach Anspruch 5, **dadurch gekennzeichnet,**
daß jeder Zustellschlitten (6) eine Führung (7) und einen Antrieb (8) zur Zustellung der Entgratungseinrichtung orthogonal zur Kastenseitenwand des auf den Hubtisch positionierten Kastens aufweist.

7. Anlage nach Anspruch 6, **dadurch gekennzeichnet,**
daß die Zustellung jeweils auf das Kasteneck hin erfolgt.

8. Anlage nach Anspruch 5, 6 oder 7, **dadurch gekennzeichnet,**
daß jeder Zustellschlitten (6) eine zur Zustellführung (7) ortogonale Führung und Antrieb (9) für den Vorschub bzw. die Arbeitsbewegung der Entgratungseinrichtung längs der zur entgratenden Kastenseitenwand aufweist.

9. Anlage nach einem der vorhergehenden Ansprüche, **dadurch gekennzeichnet,**
daß die Entgratungseinrichtung eine vertikal ausgerichtete Verstellschiene (10) aufweist, an der die Entgratungsmesser (11) je Kastenseite einstellbar und fixierbar aufgenommen sind.

10. Anlage nach einem der vorhergehenden Ansprüche, **dadurch gekennzeichnet,**
daß die Vorschubbewegung der Messer (11) der Entgratungseinrichtung zwischen ein stellbaren Endanschlägen erfolgt.

11. Anlage nach einem der vorhergehenden Ansprüche, **dadurch gekennzeichnet,**
daß die Entgratungsstation (2) mit Fühlern bzw. Detektoren zum Erkennen und zur Einstellung eines Flaschenkastens versehen ist und daß die Arbeitsbewegungen der Einheiten der Entgratungsstation (2) elektronisch gesteuert sind.

12. Anlage nach einem der vorhergehenden Ansprüche, **dadurch gekennzeichnet,**
daß an der Entgratungsstation eine Absaugeinrichtung vorgesehen ist.

## Claims

1. A device for finishing plastic crates for bottles which, after removal from the forming tool, are subjected to a deburring process and the side walls of which are compressed along a compression path consisting of compression stations by means of automatic devices for type identification, alignment and positioning, characterised in that the deburring station (2) is incorporated in the compression path but is located in front of the compression stations forming the compression path, in certain cases with the inclusion of an intermediate storage point, and that the deburring station, or specifically the deburring process, is rendered fully automatic, whereby the devices for type identification, alignment and positioning used for compression can also be used for the automation of the deburring process.

2. A device according to claim 1, characterised in that, after identification at the deburring station (2), the bottle crate (3) is set in position, and thereafter the deburring process is effected synchronously on all four sides of the crate.

3. A device according to claim 1 or 2, characterised in that, for correct positioning, the deburring station (2) comprises a vertically adjustable lifting table (4) for grasping and holding the bottle crate (3).

4. Devices according to claim 3, characterised in that the lifting table (4) and, specifically and preferably, the table top comprises clamping or grab jaws for holding the bottle crate.

5. A device according to claim 3 or 4, characterised in that, for the processes of deburring, the deburring station comprises four application cradles (6) which are grouped around the lifting table for the treatment of the four sides of the crate.

6. A device according to claim 5, characterised in that each application cradle (6) comprises a guideway (7) and a drive (8) for applyingthe deburring device orthogonally to the side wall of the crate which has been set in position on the lifting table.

7. A device according to claim 6, characterized in that the application is effected in each case at a corner of the crate.

8. A device according to claim 5, 6 or 7, characterised in that, for the guidance (7) of the application, each application cradle (6) comprises an orthogonal guideway and drive (9) for the feed or operating movement of the deburring device along the side wall of the crate which is being deburred.

9. A device according to one of the preceding claims, characterised in that the deburring device comprises a vertically arranged adjusting bar (10) holding, for each side of the crate respectively, the deburring blades (11) which can be adjusted and set.

10. A device according to one of the preceding claims, characterised in that the feed motion of the blades (11) of the deburring device is effected between adjustable end stops.

11. A device according to one of the preceding claims, characterised in that the deburring station (2) is provided with feelers or detectors for identifying and positioning a bottle crate, and that the operating movements of the component units of the deburring station (2) are controlled electronically.

12. A device according to one of the preceding claims, characterised in that a suction device is provided at the deburring station.

## Revendications

1. Dispositif pour la finition de casiers à bouteilles en matière plastique, casiers à bouteilles qui sont soumis à un traitement d'ébarbage après avoir été extraits de l'outil de formage puis sont imprimés sur leurs parois, sur une chaîne d'impression formée de stations, avec utilisation de dispositifs automatiques d'identification du type, d'alignement et de positionnement, caractérisé en ce que la station d'ébarbage (2) est intégrée dans la chaîne d'impression, mais disposée devant les stations d'impression formant cette chaîne, le cas échéant avec insertion d'un emmagasinage temporaire, et en ce que la station d'ébarbage ou le traitement d'ébarbage sont automatisés, les dispositifs d'identification du type, d'alignement et de positionnement utilisés pour l'impression pouvant également être utilisés pour l'automatisation du traitement d'ébarbage.

2. Dispositif selon la revendication 1, caractérisé en ce que, après identification, le casier à bouteilles (3) est positionné sur la station d'ébarbage (2) et en ce que l'ébarbage s'effectue ensuite de façon synchrone à partir des quatre faces du casier.

3. Dispositif selon les revendications 1 ou 2, caractérisé en ce que la station d'ébarbage (2) présente, pour le positionnement, une plateforme mobile (4) déplaçable verticalement destinée à recevoir et à fixer le casier à bouteilles (3).

4. Dispositif selon la revendication 3, caractérisé en ce que la plateforme mobile (4) et, de façon privilégiée, la tablette (5) présentent des griffes de serrage ou de préhension destinées à fixer le casier à bouteilles (3).

5. Dispositif selon les revendications 3 ou 4, caractérisé en ce que la station d'ébarbage présente quatre chariots de positionnement (6) pour les dispositifs d'ébarbage, chariots groupés autour de la plateforme mobile et destinés au formage des quatre faces du casier.

6. Dispositif selon la revendication 5, caractérisé en ce que chaque chariot de positionnement (6) présente un guidage (7) et une commande (8) pour positionner le dispositif d'ébarbage de façon orthogonale par rapport à la paroi latérale du casier positionné sur la plateforme mobile.

7. Dispositif selon la revendication 6, caractérisé en ce que le positionnement a lieu à chaque fois sur l'angle du casier.

8. Dispositif selon les revendications 5, 6 ou 7, caractérisé en ce que chaque chariot de positionnement (6) présente un guidage orthogonal par rapport au guidage de positionnement (7) et une commande (9) pour l'avance ou le mouvement d'enlèvement des copeaux du dispositif d'ébarbage, le long de la paroi latérale à ébarber.

9. Dispositif selon l'une des revendications précédentes, caractérisé en ce que le dispositif d'ébarbage présente un rail réglable (10) aligné verticalement et sur lequel sont reçues les lames d'ébarbage (11), de façon réglable et fixable par face du casier.

10. Dispositif selon l'une des revendications précédentes, caractérisé en ce que le mouvement d'avance des lames (11) du dispositif d'ébarbage s'effectue entre des butées terminales réglables.

11. Dispositif selon l'une des revendications précédentes, caractérisé en ce que la station d'ébarbage (2) est munie de capteurs ou de détecteurs pour l'identification et le réglage d'un casier à bouteilles et en ce que les mouvements d'enlèvement des copeaux des unités de la station d'ébarbage (2) sont commandés électroniquement.

12. Dispositif selon l'une des revendications précédentes, caractérisé en ce qu'un dispositif aspirateur est prévu sur la station d'ébarbage.
